# EUROPÄISCHE PATENTANMELDUNG

(11) **EP 3 089 493 A1**
(43) Veröffentlichungstag der Anmeldung: **02.11.2016**
(21) Anmeldenummer: 16164396.0
(22) Anmeldetag: 08.04.2016
(51) Int. Cl.: H04W 12/02

(54) **LANDWIRTSCHAFTLICHES ARBEITSGERÄT**

(30) Priorität: 10.04.2015 DE 202015002701 U
(71) Anmelder: PÖTTINGER Landtechnik GmbH, 4710 Grieskirchen (AT)
(72) Erfinder: Edelbauer, Roland, 4600 Thalheim bei Wels (AT)
(74) Vertreter: Thoma, Michael

(57) **Zusammenfassung**

Die vorliegende Erfindung betrifft ein landwirtschaftliches Arbeitsgerät, insbesondere in Form von einem an einen Schlepper anbaubaren Anbaugerät wie Ladewagen, Pflug, Heuwerbungsmaschine oder Mähmaschine und dergleichen, mit einer elektronischen Steuervorrichtung zum Steuern und/oder Erfassen von Betriebsparametern, wobei die Steuervorrichtung einen mobilen Elektronikbaustein zum Anzeigen und/oder Eingeben von Steuerungsdaten aufweist. Erfindungsgemäß ist vorgesehen, dass der mobile Elektronikbaustein Eingabemittel zum Eingeben von Steuerbefehlen an einen Jobrechner der Steuervorrichtung besitzt und in ein bestimmungsgemäß am Körper des Maschinenbedieners zu tragendes Funktionsteil integriert ist, das an den menschlichen Körper formangepasste Befestigungsmittel zum Befestigen an einem Körperglied aufweist.

## Beschreibung

Die vorliegende Erfindung betrifft ein landwirtschaftliches Arbeitsgerät, insbesondere in Form von einem an einen Schlepper anbaubaren Anbaugerät wie Ladewagen, Pflug, Heuwerbungsmaschine oder Mähmaschine und dergleichen, mit einer elektronischen Steuervorrichtung zum Steuern und/oder Erfassen von Betriebsparametern, wobei die Steuervorrichtung einen mobilen Elektronikbaustein zum Anzeigen und/oder Eingeben von Steuerungsdaten aufweist.

Elektronisch gesteuerte landwirtschaftliche Arbeitsmaschinen besitzen üblicherweise einen Jobrechner, der diverse Stellorgane, Antriebe oder Überwachungseinrichtungen ansteuern kann und/oder mit Sensoren, Überwachungsvorrichtungen oder anderen Erfassungsmitteln verbunden ist, um bestimmte Betriebsparameter zu erfassen und abzuspeichern. Hierbei können von dem Jobrechner vorgegebene Steuerprogramme abgearbeitet und/oder von einem Maschinenbediener eingebbare Steuerbefehle ausgeführt werden, die der Jobrechner zur Ansteuerung der entsprechenden Stellorgane bzw. Antriebe verwendet bzw. in eine entsprechende Datenverarbeitung umsetzt.

Um Steuerbefehle eingeben zu können oder umgekehrte überwachte Betriebsparameter anzeigen zu können, umfasst die Steuervorrichtung des landwirtschaftlichen Geräts dabei üblicherweise eine Bedientastatur, ein Touchscreen oder andere ggf. extern anschließbare Eingabemittel sowie eine Anzeigevorrichtung beispielsweise in Form eines Bildschirms oder eines Datendruckers oder eine andere Datenausgabeeinrichtung, die mit dem genannten Jobrechner verbunden werden können und entweder unmittelbar am Anbaugerät vorgesehen oder auch am Schlepper angebracht sein können.

Zusätzlich zu solchen stationär angebrachten Ein- und/oder Ausgabegeräten, die eine Bedienung am Schlepper bzw. am Anbaugerät selbst erlauben, ist bereits vorgeschlagen worden, ein mobiles Endgerät zu verwenden, das nach Art eines Mobiltelefons ausgebildet ist und drahtlos mit dem Jobrechner der Steuervorrichtung kommunizieren kann, vgl. beispielsweise DE 102 17 398 A1. Ein solches mobiles Endgerät erleichtert die Bedienung und Überwachung der landwirtschaftlichen Arbeitsmaschine beträchtlich. Der Maschinenführer kann vom Schlepper absteigen, das mobile Endgerät mitnehmen und an verschiedenen Positionen, sei es auf dem Schlepper oder neben dem Schlepper, unmittelbar am Gerät oder ein Stück weit hiervon beabstandet, den Betrieb des landwirtschaftlichen Arbeitsgeräts steuern und überwachen.

Dennoch gibt es bei Verwendung solcher mobiler Endgeräte bisweilen Beeinträchtigungen in der Handhabung. Beispielsweise kann der Maschinenführer beim Absteigen vom Schlepper das Endgerät auf dem Schlepper liegenlassen, so dass vom Endgerät abgegebene Überwachungsmeldungen nicht wahrgenommen werden oder erst zeitversetzt zur Kenntnis des Maschinenführers gelangen. Zum anderen kann es schwierig sein, gleichzeitig das Endgerät zu betätigen bzw. abzulesen und andere Tätigkeiten auszuführen, beispielsweise eine beidhändig vorzunehmende Maschinenbetätigung oder -handhabung wie Lenken und Schalten auszuführen, oder die Fahrspur auf Hindernisse zu beobachten.

Aus der Schrift DE 10 2014 103 195 A1 ist eine Datenbrille bekannt, die ein Display für das Auge der die Brille tragenden Bedienperson aufweist. Mittels dieser Datenbrille sollen der Bedienperson Informationen überlagert mit der landwirtschaftlichen Arbeitsumgebung im Sinne einer angereicherten Realität (augmented reality) angezeigt werden. Hierdurch wird zwar der Bedienperson die Aufnahme solcher zusätzlicher Informationen erleichtert, allerdings bleibt es für den Maschinenführer weiterhin anspruchsvoll, komplexe Maschinenfunktionen zu steuern und bei plötzlich auftretenden, unerwarteten Arbeitssituationen ausreichend schnell richtig zu reagieren und den passenden Steuerungshebel zu betätigen, von denen es am Maschinenführerstand mittlerweile eine große Vielzahl gibt.

Hiervon ausgehend liegt der vorliegenden Erfindung die Aufgabe zugrunde, ein verbessertes landwirtschaftliches Arbeitsgerät der genannten Art zu schaffen, das Nachteile des Standes der Technik vermeidet und Letzteren in vorteilhafter Weise weiterbildet. Insbesondere soll eine einfach handzuhabende Steuerung und Überwachung der Maschine mit hohem Bedienungskomfort erreicht werden, die den Maschinenführer möglichst wenig von anderen Obliegenheiten wie Beobachten der Fahrspur und dergleichen ablenkt.

Erfindungsgemäß wird die genannte Aufgabe durch ein landwirtschaftliches Arbeitsgerät gemäß Anspruch 1 gelöst. Bevorzugte Ausgestaltungen der Erfindung sind Gegenstand der abhängigen Ansprüche.

Es wird also vorgeschlagen, den zumindest einen mobilen Elektronikbaustein der Steuervorrichtung als sogenannten "Wearable"-Baustein auszubilden, der ohne von einer Hand gegriffen werden zu müssen am menschlichen Körper angebracht ist und getragen wird. Erfindungsgemäß ist vorgesehen, dass der mobile Elektronikbaustein Eingabemittel zum Eingeben von Steuerbefehlen an einen Jobrechner der Steuervorrichtung besitzt und in ein bestimmungsgemäß am Körper des Maschinenbedieners zu tragendes Funktionsteil integriert ist, das an den menschlichen Körper formangepasste Befestigungsmittel zum Befestigen an einem Körperglied aufweist. Das Funktionsteil bildet ein Anziehsachenteil, das der Maschinenbediener an einem seiner Körperglieder anzieht, wodurch der Elektronikbaustein automatisch am Körper getragen wird. Der Elektronikbaustein ist ohne aktives Zutun oder Greifen des Maschinenbedieners an dessen Körper tragbar, ohne die Bewegungsfreiheit der Hände, Arme und Beine des Maschinenbedieners zu beeinträchtigen, so dass der Maschinenbediener zwar den Elektronikbaustein der Steuervorrichtung permanent am Körper trägt, gleichzeitig trotzdem aber Hände, Arme und Beine frei hat, um andere Handhabungsaufgaben wie Lenken, Gang Schalten oder anderes auszuführen. Dabei kann der Maschinenführer über das am Körper getragene Anziehsachenteil Steuerbefehle an den Jobrechner der Steuervorrichtung des landwirtschaftlichen Arbeitsgeräts eingeben, ohne dass der Maschinenführer zunächst den passenden Steuerhebel am Maschinenführerstand suchen müsste. Dies ist insbesondere hilfreich, wenn sich der Maschinenführer beispielsweise zurück zum Anbaugerät gedreht hat und die Steuerhebel des Schleppercockpits nicht unmittelbar vor ihm liegen, und erlaubt ein rasches Reagieren in kritischen Situationen.

Der bestimmungsgemäß am Körper zu tragende Funktionsteil, in den der genannte Elektronikbaustein integriert ist, kann dabei unabhängig von der Funktion des Elektronikbausteins weitere Funktionen ausführen bzw. erfüllen, insbesondere den Körper des Maschinenbedieners schützen, bedecken, warm halten oder verhüllen.

Insbesondere kann der genannte mobile Elektronikbaustein in ein Kleidungsstück wie beispielsweise Jacke oder Hose integriert sein. Beispielsweise kann der Elektronikbaustein in ein Kleidungsstück eingewebt, eingenäht oder in anderer Weise daran permanent befestigt sein, so dass das vom Maschinenbediener angezogene Kleidungsstück den Elektronikbaustein trägt und mit sich führt.

Vorzugsweise kann der mobile Elektronikbaustein der Steuerungsvorrichtung in einen Handschuh integriert sein.

Die Integration des mobilen Elektronikbausteins in einen Handschuh erlaubt es, auf vielfältige Weise Steuerbefehle an den Jobrechner einzugeben. Beispielsweise können die Eingabemittel zum Eingeben solcher Steuerbefehle zumindest einen Piezosensor umfassen, der in den Handschuh integriert sein kann, um durch Drücken und/oder Biegen und/oder Ziehen des Piezoelements einen Steuerbefehl erzeugen zu können, beispielsweise durch Ballen einer Faust und/oder Auseinanderspreizen der den Handschuh tragenden Finger und/oder Aneinanderdrücken zweier Fingerkuppen, denen das Piezoelement zugeordnet ist. Mittels eines solchen Piezosensors kann beispielsweise aber auch erfasst werden, wenn die den Handschuh tragende Hand des Maschinenführers einen Steuerknüppel beispielsweise in Form eines Joysticks plötzlich fest drückt, woraus beispielsweise geschlossen werden kann, dass eine Gefahrensituation vorliegt, aufgrund derer dann entsprechende Steuerungsreaktionen, beispielsweise das Anheben eines Arbeitsaggregats und/oder Abbremsen des Arbeitsgeräts eingeleitet werden können.

Alternativ oder zusätzlich zu einem solchen Piezoelement können die Eingabemittel zum Eingeben von Steuerbefehlen auch einen Beschleunigungs- und/oder Ausrichtungssensor umfassen, mittels dessen Bewegungen des den Elektronikbaustein tragenden Körperglieds erfasst werden können. Insbesondere können Handbewegungen erfasst werden, wenn der genannte Beschleunigungs- und/oder Ausrichtungssensor in einen Handschuh integriert ist. Mittels eines solchen Beschleunigungs- und/oder Ausrichtungssensors kann insbesondere eine Gestensteuerung realisiert werden. Werden bestimmte Körpergliedbewegungen erfasst, deren Beschleunigung und/oder Geschwindigkeit ein bestimmtes Maß erreichen oder überschreiten und/oder deren Richtung in eine bestimmte Raumrichtung geht, können entsprechende Steuerbefehle an den Jobrechner des Arbeitsgeräts übermittelt werden.

Insbesondere kann der Elektronikbaustein dabei derart ausgebildet sein, dass es zwischen den Richtungen der Körpergliedbewegungen und entsprechenden Stellbewegungen eines Arbeitsaggregats eine Korrelation gibt, insbesondere dahingehend, dass beispielsweise eine aufwärtsgerichtete Bewegung des Elektronikbausteins in eine aufwärtsgerichtete Bewegung des Arbeitsaggregats und/oder eine abwärtsgerichtete Bewegung des Elektronikbausteins in eine abwärtsgerichtete Bewegung des Arbeitsaggregats umgesetzt wird.

Wird beispielsweise bei Integration des genannten Elektronikbausteins in einen Handschuh die Hand ruckartig nach oben bewegt, sodass eine Beschleunigung und/oder Geschwindigkeit in näherungsweise vertikaler Richtung eine bestimmte Größe erreicht, kann beispielsweise die Pickup eines Ladewagens angehoben und/oder der Rechkreisel eines Schwaders oder Zetters angehoben und/oder die Mähtrommel eines Mähwerks angehoben oder andere kollisionsgefährdete Arbeitsaggregate anderer Anbaugeräte angehoben werden. Umgekehrt können bei abwärtsgehenden Handbewegungen, die eine entsprechende Geschwindigkeit und/oder Beschleunigung nach unten besitzen, in ein Absenken der vorgenannten Arbeitsaggregate umgesetzt werden.

Alternativ oder zusätzlich könnten bestimmte Handbewegungen auch in anderer Weise erfasst werden, beispielsweise durch eine optische Erfassungseinrichtung, die beispielsweise im Cockpit eines Schleppers angebracht sein könnte und auf die üblicherweise am Lenkrad ruhenden Hände eines Maschinenführers gerichtet sein könnte.

Alternativ oder zusätzlich zu einer solchen Bewegungssteuerung können die Eingabemittel des Elektronikbausteins in Weiterbildung der Erfindung auch einen Körperfunktionssensor umfassen, um bestimmte Körperfunktionen zu erfassen und in Abhängigkeit bestimmter Körperfunktionen gewisse Steuerbefehle auszulösen. Ein solcher Körperfunktionssensor kann beispielsweise ein Pulsfrequenzsensor und/oder ein Hautschweiß-Sensor und/oder ein Hauttemperatursensor sein. Einer solchen Überwachung der Körperfunktionen liegt der Gedanke zugrunde, dass speziell bei Auftreten von Stress und/oder Gefahrensituationen bestimmte Körperfunktionen reagieren, was dazu genutzt werden kann, entsprechende Steuerbefehle zu erzeugen, die der Stress- bzw. Gefahrensituation entgegenwirken. Wird beispielsweise mittels eines Pulsfrequenzsensors, der beispielsweise in einen Handschuh integriert sein kann, ein plötzlicher Anstieg der Pulsfrequenz erfasst, der eine bestimmte Anstiegsrate übersteigt und/oder eine vorbestimmte Pulsfrequenz übersteigt, kann davon ausgegangen werden, dass eine Gefahrensituation eingetreten ist, woraufhin ein Steuerbefehl beispielsweise zum Absenken der Fahrgeschwindigkeit und/oder zum Anheben des Arbeitsaggregats und/oder zum Absenken der Arbeitsgeschwindigkeit des Arbeitsaggregats abgegeben werden kann. In ähnlicher Weise könnten ähnliche Steuerbefehle erzeugt werden, wenn plötzlich der Körperschweiß und/oder die Körpertemperatur ansteigt.

Auch wenn die zuvor beschriebenen Eingabemittel in Form eines Piezoelements, eines Beschleunigungs- und/oder Ausrichtungs- und/oder Lagesensors, und des genannten Körperfunktionssensors im Zusammenhang mit einem Handschuh beschrieben worden sind, können diese Eingabemittel auch anderen Kleidungsstücken oder anderen am Körper tragbaren Accessoire-Teilen zugeordnet werden bzw. darin integriert sein.

Alternativ oder zusätzlich kann der/ein mobiler Elektronikbaustein auch in einen Schuh oder in eine Kopfbedeckung wie beispielsweise Helm oder Mütze integriert sein.

Alternativ oder zusätzlich zu einem solchen in ein Kleidungsstück integrierten Elektronikbaustein kann auch ein mobiler Elektronikbaustein vorgesehen sein, der in ein am Körper tragbares Accessoire- bzw. Funktionsteil des persönlichen Bedarfs integriert ist, insbesondere in eine Uhr oder in eine Brille. Beispielsweise kann der genannte Elektronikbaustein in eine Smartwatch integriert sein, die über den genannten Elektronikbaustein mit der Steuerungsvorrichtung des landwirtschaftlichen Arbeitsgeräts kommunizieren kann, insbesondere Steuerbefehle an einen Jobrechner übermitteln und/oder Steuerungsdaten von dem Jobrechner her kommend anzeigen kann. Alternativ oder zusätzlich kann der Elektronikbaustein in eine Datenbrille integriert sein, die der Maschinenbediener auf der Nase bzw. vor den Augen trägt, wobei Steuerungsdaten auf der Datenbrille angezeigt werden können. Die Datenbrille kann hierzu beispielsweise ein Head-up-Display besitzen, das Informationen auf zumindest ein Brillenglas projiziert und/oder ein transparentes Bildschirmglas besitzen, auf dem beispielsweise nach dem Flüssigkristallprinzip Informationen darstellbar sind. Gleichzeitig kann die genannte Datenbrille auch eine die Sehfunktion unterstützende Funktion erfüllen, beispielsweise geschliffene optische Gläser umfassen.

Je nach Funktionalität der Steuervorrichtung des landwirtschaftlichen Arbeitsgeräts kann der genannte "Wearable"-Baustein unterschiedlich beschaffen sein. Vorteilhafterweise kann der genannte Baustein optische und/oder akustische und/oder taktile Anzeigemittel umfassen, beispielsweise in Form eines Displays und/oder eines Summers und/oder eines Lautsprechers und/oder eines Vibrationselements.

Sind beispielsweise in einen Schuh und/oder Handschuh integrierte Elektronikbausteine vorgesehen, können Meldungen durch Vibrieren des Schuhs und/oder Vibrieren des Handschuhs gemeldet und/oder zusätzlich auf einem Display angezeigt werden. Alternativ oder zusätzlich kann auch eine akustische Meldung abgegeben werden.

Alternativ oder zusätzlich können Meldungen auf dem Display der Smartwatch angezeigt oder auf der Datenbrille dargestellt werden, wobei auch hier zusätzliche akustische und/oder taktile Meldungen abgebbar sein können.

In vorteilhafter Weiterbildung der Erfindung kann hierbei vorgesehen sein, dass an verschiedenen Körpergliedern tragbare Wearables bzw. Elektronikbausteine verschiedene Steuerungsdaten bzw. verschiedene Informationen anzeigen, so dass der Maschinenbediener intuitiv merkt, welche Steuerungsfunktion dargestellt wird. Beispielsweise kann ein erster Betriebsparameter wie ein Überschreiten des zulässigen Ladegewichts eines Ladewagens durch Vibrieren der Schuhe angezeigt werden und ein zweiter Betriebsparameter wie beispielsweise eine Überlastung der Pickup durch einen zu großen Ernteschwad und/oder zu schnelles Fahren durch ein Vibrieren eines Handschuhs angezeigt werden und das Auslösen eines Schneidmessers beispielsweise durch Auftreffen eines Steins durch Summen der Smartwatch angezeigt werden. Vorteilhafterweise können verschiedenen Betriebsparametern und/oder verschiedenen Maschinenfunktionen jeweils separate Elektronikbausteine und/oder Anzeigemodi an verschiedenen Kleidungsstücken und/oder an verschiedenen Körpergliedern zugeordnet sein.

Alternativ oder zusätzlich können verschiedenen Betriebsparametern und/oder verschiedenen Steuerungsfunktionen der Landmaschine verschiedene Anzeigemodi desselben Elektronikbausteins zugeordnet sein. Beispielsweise kann eine Überladung durch ein Vibrieren der Handschuhe angezeigt werden und eine Überlastung der Pickup durch das Aufleuchten von LEDs am Handschuh angezeigt werden. Die genannten verschiedenen Anzeigesignale können dabei auch an verschiedenen Elektronikbausteinen und/oder an verschiedenen Abschnitten der Funktionskleidung angezeigt werden, beispielsweise das vorgenannte Überladen durch Vibrieren der Schuhe und die Überlastung der Pickup durch Aufleuchten der Handschuhe.

Alternativ oder zusätzlich können verschiedenen landwirtschaftlichen Arbeitsgeräten und/oder verschiedenen Komponenten einer Arbeitsgerätekombination verschiedene Elektronikbausteine an verschiedenen Kleidungsstücken und/oder an verschiedenen Körpergliedern zugeordnet sein. Beispielsweise kann für eine Sämaschinenkombination zumindest ein Elektronikbaustein in einem Schuh vorgesehen sein, um den Betrieb einer Bodenbearbeitungsgruppe der Sämaschinenkombination zu steuern und/oder zu überwachen, und in einem Handschuh ein Elektronikbaustein vorgesehen sein, um das Säaggregat der Sämaschinenkombination zu steuern und/oder zu überwachen. Beispielsweise kann auch zumindest ein Elektronikbaustein in eine Hose und/oder in einen Schuh integriert sein, um einen Pflug zu steuern und/oder zu überwachen, während zumindest ein weiterer Elektronikbaustein beispielsweise in einer Jacke oder einem Handschuh vorgesehen sein kann, um eine Sämaschine zu überwachen und/oder zu steuern. Durch die Anordnung von Elektronikbausteinen, die verschiedenen landwirtschaftlichen Arbeitsgeräten zugeordnet sind, an verschiedenen Körpergliedern kann der Maschinenführer intuitiv mit der jeweiligen Maschine kommunizieren, was die Maschinenbedienung auch nach dem Wechsel eines Anbaugeräts erleichtert.

Zur Eingabe von Steuerbefehlen kann der zumindest eine Elektronikbaustein grundsätzlich verschiedene Eingabemittel besitzen. Beispielsweise kann ein Touchscreen vorgesehen sein, das durch Berühren Eingabesignale erzeugen kann, wobei ein solches Touchscreen vorteilhafterweise eine Menüsteuerung und/oder ein Tastaturfeld nach Art eines Keyboards anzeigen kann, um Schreibbefehle eingeben zu können. Alternativ oder zusätzlich können als Eingabemittel Druck- oder Stellschalter beispielsweise in Form von Schiebeschaltern, Druckknöpfen oder Kipphebeln vorgesehen sein, beispielsweise in Form von Druckknöpfen an einer Smartwatch.

Alternativ oder zusätzlich kann als Eingabemittel auch ein Piezoelement in das am Körper tragbare Funktionsteil integriert sein, beispielsweise in Form einer Piezomembran, die in einen Abschnitt eines Kleidungsstücks eingenäht, eingewebt oder in anderer Weise integriert ist. Beispielsweise kann im Bereich eines Fingers eines Fingerhandschuhs ein solches Piezoelement integriert sein, so dass durch Abknicken des Fingers und damit Verformen des Piezoelements ein entsprechendes Stellsignal eingebbar ist.

Alternativ oder zusätzlich kann ein solches Piezoelement beispielsweise in die Sohle eines Schuhs integriert sein, so dass beispielsweise durch kräftiges Aufstampfen auf den Boden ein Stellsignal erzeugbar ist.

Die Erfindung wird nachfolgend anhand eines bevorzugten Ausführungsbeispiels und einer zugehörigen Zeichnung näher erläutert. In der Zeichnung zeigt:

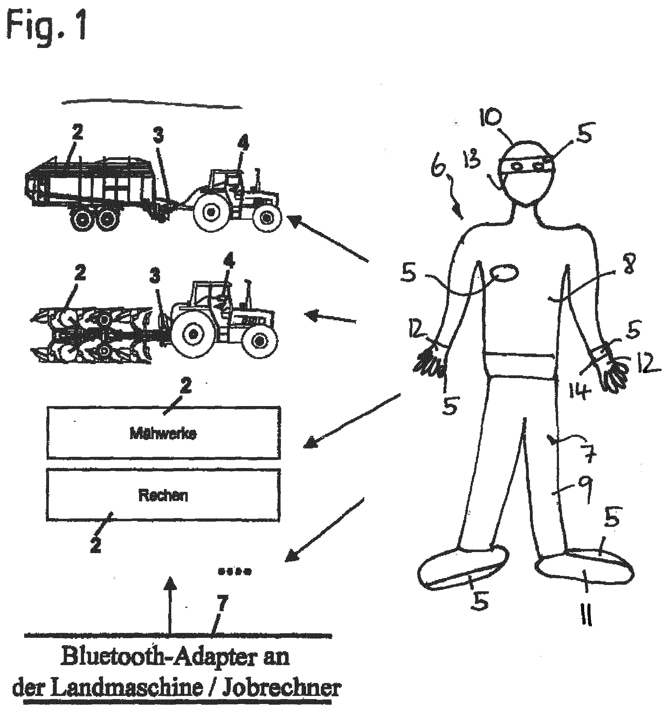

- Fig. 1:: eine schematische Darstellung einer Steuerungsvorrichtung für verschiedene landwirtschaftliche Anbaugeräte, die bestimmungsgemäß am Körper tragbare, in Kleidungsstücke integrierte Elektronikbausteine in Form von sogenannten Wearables umfasst.

Wie Fig. 1 zeigt, können verschiedene landwirtschaftliche Arbeitsgeräte 2 wie beispielsweise ein Ladewagen, ein Pflug, ein Mähwerk oder ein Rechen jeweils als Anbaugerät ausgebildet sein, das an einen Schlepper anbaubar ist.

Wie Fig. 1 ebenfalls zeigt, können die landwirtschaftlichen Arbeitsgeräte 2 dabei jeweils eine elektronische Steuervorrichtung 3 aufweisen, die beispielsweise einen am Arbeitsgerät selbst angeordneten Jobrechner umfassen kann. Die genannte Steuervorrichtung 3 kann hierbei verschiedene Stellglieder, Hydraulikkreise, Elektromotoren, Antriebsvorrichtungen und andere Arbeitsaggregate an dem jeweiligen Arbeitsgerät ansteuern. Dies kann beispielsweise bei dem gezeigten Ladewagen der Kratzbodenantrieb, die Pickup, die Entladeklappe oder dergleichen sein. Beim ebenfalls dargestellten Pflug können dies Hydraulikzylinder zum Einstellen der Vorfurchenbreite, der Arbeitstiefe oder ein Wendezylinder sein.

Die genannte elektronische Steuervorrichtung 3 kann hierbei mit einem Endgerät 4 kommunizieren, das am Schlepper angeordnet sein kann und beispielsweise die Form eines Tablets mit Touchscreen aufweisen kann, so dass einerseits verschiedene Informationen vom Jobrechner 3 an dem Endgerät 4 angezeigt und umgekehrt Steuerbefehle über das Endgerät 4 in die Steuervorrichtung 3 eingegeben werden können.

Um zumindest einen Betriebsparameter des landwirtschaftlichen Arbeitsgeräts steuern und/oder überwachen zu können, kann die genannte Steuervorrichtung 3 ferner mobile Elektronikbausteine 5 in Form von sog. Wearables umfassen, die in Funktionsteile bzw. Anziehsachen- oder Bekleidungs-Teile 6 integriert sind, die bestimmungsgemäß am Körper getragen werden und bestimmungsgemäß von selbst am Körper ohne aktives Greifen oder Balancieren halten. Die genannten Funktionsteile können hierbei ein Bekleidungsstück 7 wie beispielsweise eine Jacke 8 oder eine Hose 9 sein, die an den Körper formangepasst sind und durch ihre Formanpassung selbsttragend am Körper halten. In an sich bekannter Weise können hierbei Hilfsmittel wie Gürtel, Hosenträger, Reißverschlüsse und dergleichen verwendet werden.

Alternativ oder zusätzlich können die Funktionsteile, in die ein Elektronikbaustein 5 integriert ist, auch eine Kopfbedeckung 10 wie beispielsweise ein Stirnband, eine Mütze oder einen Helm umfassen, und/oder auch Schuhe 11, ggf. auch in Form von Stiefeln, und/oder Handschuhe 12 aufweisen.

Alternativ oder zusätzlich zu solchen Bekleidungsstücken kann ein Elektronikbaustein auch in ein persönliches Accessoire, das bestimmungsgemäß am Körper getragen wird und eine Schmuckfunktion und/oder weitere persönliche Zusatzfunktionen wie Sehhilfe und dergleichen erfüllen kann, integriert sein. Wie Fig. 1 zeigt, kann ein solches persönliches Accessoireteil eine Datenbrille 13, eine Uhr 14, ein Fingerring, ein Armreif oder ein Gürtel und dergleichen sein, in die bzw. in den ein Elektronikbaustein 5 zum Steuern und/oder Überwachen des landwirtschaftlichen Arbeitsgeräts 2 integriert ist.

Wie zuvor erläutert, können dabei die genannten Elektronikbausteine 5 verschiedenen Betriebsparametern und/oder Steuerungsfunktionen eines landwirtschaftlichen Arbeitsgerätes 2 zugeordnet sein, so dass an verschiedenen Körpergliedern verschiedene Betriebsparameter überwacht und/oder gesteuert werden können. Beispielsweise kann mit einem Elektronikbaustein 5 im Handschuh 12 die Pickup des Ladewagens gesteuert und/oder überwacht werden, während beispielsweise mit einem Elektronikbaustein 5 in einem Schuh 11 der Kratzboden des Ladewagens 2 gesteuert bzw. überwacht werden kann. Alternativ oder zusätzlich können verschiedene Elektronikbausteine 5 auch mit verschiedenen landwirtschaftlichen Arbeitsgeräten kommunizieren, beispielsweise dergestalt, dass ein Elektronikbaustein 5 in der Jacke 8 zum Steuern und/oder Überwachen des dargestellten Pflugs 2 vorgesehen ist, während ein weiterer Elektronikbaustein 5 beispielsweise in der Hose 9 zum Steuern des in Fig. 1 gezeigten Mähwerks 2 vorgesehen ist.

Vorteilhafterweise können die in Form von Wearables ausgebildeten Elektronikbausteine 5 mit dem jeweiligen landwirtschaftlichen Arbeitsgerät 2 drahtlos kommunizieren. Dies kann beispielsweise über Bluetooth erfolgen, wobei hier die Steuervorrichtung 3 am Arbeitsgerät 2 einen Bluetooth-Adapter 7 aufweisen kann, über den der jeweilige Elektronikbaustein 5 an die Steuervorrichtung 3 anbindbar ist. Analog umfasst der jeweilige Elektronikbaustein 5 ebenfalls eine Bluetooth-Sende- und/oder -Empfangseinrichtung.

Die Datenkommunikation zwischen den Elektronikbausteinen 5 und dem Steuerrechner 3 des Arbeitsgeräts 2 ist hierbei vorteilhafterweise bidirektional, so dass sowohl überwachte Betriebsparameter an dem Elektronikbaustein 5 angezeigt werden können und Steuerbefehle am Elektronikbaustein 5 eingegeben werden können.

Die Elektronikbausteine 5 können hierbei in der eingangs beschriebenen Weise ausgebildete Eingabemittel zum Eingeben von Steuerbefehlen und Anzeigemittel zum Anzeigen von Steuerungsdaten und/oder überwachten Betriebsparametern aufweisen, wie ebenfalls eingangs beschrieben.

## Patentansprüche

1. Landwirtschaftliches Arbeitsgerät, insbesondere in Form eines an einen Schlepper anbaubaren Anbaugeräts wie Ladewagen, Pflug, Mähmaschine oder Heuwerbungsmaschine, mit einer elektronischen Steuervorrichtung (3) zum Steuern und/oder Erfassen von Betriebsparametern, wobei die Steuervorrichtung (3) einen mobilen Elektronikbaustein (5) zum Anzeigen und/oder Eingeben von Steuerungsdaten aufweist, **dadurch gekennzeichnet, dass** der mobile Elektronikbaustein (5) Eingabemittel zum Eingeben von Steuerbefehlen an einen Jobrechner der Steuervorrichtung (3) besitzt und in ein bestimmungsgemäß am Körper des Maschinenbedieners zu tragendes Anziehteil (6) integriert ist, das selbsthaltend an einem Körperglied anziehbar ist.

2. Landwirtschaftliches Arbeitsgerät nach dem vorhergehenden Anspruch, wobei der mobile Elektronikbaustein (5) in ein Kleidungsstück, insbesondere Oberbekleidungsstück wie Jacke, Hose oder Hemd, integriert ist, insbesondere eingewebt und/oder eingenäht ist und/oder einen festen Bestandteil des genannten Kleidungsstücks bildet.

3. Landwirtschaftliches Arbeitsgerät nach dem vorhergehenden Anspruch, wobei der zumindest eine mobile Elektronikbaustein (5) in einen Handschuh (12) integriert ist.

4. Landwirtschaftliches Arbeitsgerät nach einem der beiden vorhergehenden Ansprüche, wobei die Eingabemittel des zumindest einen Elektronikbausteins (5) ein in ein Kleidungsstück integriertes Piezoelement aufweisen.

5. Landwirtschaftliches Arbeitsgerät nach einem der vorhergehenden Ansprüche, wobei die Eingabemittel des zumindest einen Elektronikbausteins (5) einen Beschleunigungs- und/oder Raumwinkelsensor umfassen und dazu ausgebildet sind, Steuerbefehle in Abhängigkeit von bestimmten Beschleunigungen und/oder Raumausrichtungen, insbesondere durch eine bestimmte Beschleunigung in einer bestimmten Raumausrichtung im Sinne einer Gestensteuerung zu erzeugen.

6. Landwirtschaftliches Arbeitsgerät nach dem vorhergehenden Anspruch, wobei die Eingabemittel des zumindest einen Elektronikbausteins (5) ein Hub-/Senkmodul zum Erzeugen eines Steuerbefehls zum Anheben eines Arbeitsaggregats bei Erfassen einer aufwärts gerichteten Bewegung des Beschleunigungs- und/oder Ausrichtungssensors, die eine vorbestimmte Beschleunigung und/oder Geschwindigkeit erreicht und/oder überschreitet, und zum Erzeugen eines Steuerbefehls zum Absenken eines Arbeitsaggregats bei Erfassen einer abwärts gerichteten Bewegung, die eine vorbestimmte Beschleunigung und/oder Geschwindigkeit erreicht und/oder überschreitet, wobei vorzugsweise eine Pick-up eines Ladewagens und/oder ein Rechkreisel einer Heuwerbungsmaschine und/oder eine Mähtrommel eines Mähwerks durch eine Aufwärtsbewegung des Elektronikbausteins (5) anhebbar ist.

7. Landwirtschaftliches Arbeitsgerät nach einem der vorhergehenden Ansprüche, wobei die Eingabemittel des zumindest einen Elektronikbausteins (5) einen Körperfunktionssensor, insbesondere Pulsfrequenz- und/oder Hautschweiß- und/oder Hauttempertatursensor, umfassen und dazu ausgebildet sind, bei Auftreten einer bestimmten Körperfunktion Steuerbefehle an den Jobrechner zu erzeugen.

8. Landwirtschaftliches Arbeitsgerät nach dem vorhergehenden Anspruch in Verbindung mit Anspruch 3, wobei in den Handschuh (12) ein Pulsfrequenzsensor integriert ist, wobei der mobile Elektronikbaustein (5) dazu ausgebildet ist, bei Erfassen einer Pulsfrequenz, die eine vorbestimmte Pulsfrequenz überschreitet, und/oder Erfassen eines Pulsfrequenz-Anstiegs, der eine vorbestimmte Anstiegsrate überschreitet, ein sicherheitsrelevantes Signal zu erzeugen, insbesondere ein fahrgeschwindigkeitsreduzierendes Steuersignal an dem Jobrechner zu erzeugen.

9. Landwirtschaftliches Arbeitsgerät nach einem der vorhergehenden Ansprüche, wobei verschiedenen Betriebsparametern und/oder verschiedenen Steuerungsfunktionen zugeordnete Elektronikbausteine (5) in verschiedene Funktionsteile (6) und/oder verschiedene Abschnitte eines Funktionsteils (6) integriert sind, die bestimmungsgemäß an verschiedenen Körpergliedern des Maschinenbedieners anziehbar sind, so dass an einem ersten Körperglied ein erster Betriebsparameter und/oder eine erste Steuerungsfunktion überwachbar und/oder steuerbar ist und an einem zweiten Körperglied ein zweiter Betriebsparameter und/oder eine zweite Steuerungsfunktion überwachbar und/oder steuerbar ist.

10. Maschinensystem umfassend mehrere landwirtschaftliche Arbeitsgeräte (2), die jeweils gemäß einem der vorhergehenden Ansprüche ausgebildet sind, wobei verschiedene Elektronikbausteine (5), die verschiedenen landwirtschaftlichen Arbeitsgeräten (2) zugeordnet sind, in verschiedene Funktionsteile (6) oder verschiedene Abschnitte eines Funktionsteils (6) integriert sind, die bestimmungsgemäß an verschiedenen Körpergliedern des Maschinenbedieners anziehbar sind, so dass ein erstes landwirtschaftliches Arbeitsgerät an einem ersten Körperglied überwachbar und/oder steuerbar ist und ein zweites landwirtschaftliches Arbeitsgerät an einem zweiten Körperglied überwachbar und/oder steuerbar ist

11. Landwirtschaftliches Arbeitsgerät nach einem der vorhergehenden Ansprüche, wobei der zumindest eine Elektronikbaustein (5) in einen Schuh (11) integriert ist.

12. Landwirtschaftliches Arbeitsgerät nach einem der vorhergehenden Ansprüche, wobei der zumindest eine Elektronikbaustein (5) in eine Kopfbedeckung (10) wie Helm, Mütze oder Stirnband integriert ist.

13. Landwirtschaftliches Arbeitsgerät nach einem der vorhergehenden Ansprüche, wobei der zumindest eine Elektronikbaustein (5) in eine Datenbrille (13) integriert ist.

14. Landwirtschaftliches Arbeitsgerät nach einem der vorhergehenden Ansprüche, wobei der zumindest eine Elektronikbaustein (5) in eine Armbanduhr (14) integriert ist.

15. Landwirtschaftliches Arbeitsgerät nach einem der vorhergehenden Ansprüche, wobei der zumindest eine Elektronikbaustein (5) Anzeigemittel zum Anzeigen von Steuerdaten und/oder Betriebsparametern aufweist, wobei die Anzeigemittel eine optische Anzeigeeinrichtung und/oder eine akustische Anzeigeeinrichtung und/oder eine Vibrationsanzeigeeinrichtung, insbesondere ein in ein Kleidungsstück integriertes Piezoelement, umfassen.

16. Landwirtschaftliches Arbeitsgerät nach dem Oberbegriff des Anspruchs 1 oder einem der vorhergehenden Ansprüche, wobei der zumindest eine mobile Elektronikbaustein (5) in einen Handschuh (12) integriert ist, der integrierte Anzeigemittel zum Anzeigen von Steuerdaten und/oder Betriebsparametern an einer Handschuhoberfläche aufweist.
